# EUROPEAN PATENT SPECIFICATION

(11) **EP 2 534 079 B1**
(45) Date of publication and mention of the grant of the patent: **13.11.2013**
(21) Application number: 11711651.7
(22) Date of filing: 09.02.2011
(51) Int. Cl.: B65G 61/00, B65G 47/244, B65G 57/081, B65G 57/112, B65G 57/22

(54) **METHOD FOR THE CONFECTION OF MULTI-LAYER PACKAGES ON BEDS, PALLETS OR THE LIKE**
VERFAHREN FÜR DIE HERSTELLUNG VON MEHRLAGIGEN VERPACKUNGEN AUF ABLAGEN, PALETTEN ODER DERGLEICHEN
PROCÉDÉ PERMETTANT LA CONFECTION DE PAQUETS MULTICOUCHES SUR DES PLATEAUX, DES PALETTES OU ANALOGUES

(30) Priority: 11.02.2010 IT GE20100016
(43) Date of publication of application: 19.12.2012
(73) Proprietor: Rossi, Gianluigi, Araure (VE)
(72) Inventor: Rossi, Gianluigi, Araure (VE)
(74) Representative: Porsia, Attilio
(86) International application number: PCT/IB2011/050540
(87) International publication number: WO 2011/098954

(56) References cited:
- EP-A1- 0 852 212
- EP-A2- 0 849 175
- DE-A1- 3 614 256
- FR-A1- 2 789 061

## Description

The present invention relates to a method for the confection of multi-layer packages on beds, pallets or the like.

In the field of confection packages containing loose products, there is a known method of using pallets or beds on which the packages are placed layer by layer to form columns or stacks of packages with a predetermined number of packages placed beside each other. The number and dimensions of these layers are dependent on the dimensions of the pallet or bed on which the stacks are formed, the stacks generally occupying the whole supporting area of the pallet. The confection process also provides for the lateral banding of the packages which is normally carried out on each layer of packages placed beside each other by wrapping them with a suitable stretch film for packaging, made from polyethylene or the like. Each layer of packages is therefore wrapped with the film in such a way that the whole stack of packages placed beside each other is eventually banded.

DE 3614256 A1 discloses a method for the confection of multiple layers of packages on pallets, comprising the following steps:
a) positioning a first object (1) in a default area of the pallet;
b) moving the pallet to allow the subsequent object, which follows the first one, to be placed next to it;
c) repeating these steps a) and b) until a first layer of objects has been placed side by side;
d) repeating steps a), b) and c) until the desired number of objects has been placed on the pallet.

However, these known methods of confection of multiple layers of packages on a pallet are extremely complicated and do not provide optimal efficiency, especially as regards the various steps of the positioning of the various packages on the pallet, and as regards the final step of wrapping the packages layer by layer. The known methods do not provide optimal stability of the resulting stack of packages or optimal distribution of the packages in each layer.

The object of the present invention is therefore to provide a method of confection of multi-layers packages on pallets, beds or the like which enables a set of layers of packages to be positioned automatically and with the maximum efficiency on a pallet, with the packages distributed on the pallet in an optimal and stable way, and which also enables these layers of packages to be wrapped in a continuous way.

This object is achieved by the present invention by means of a method for wrapping multiple layers of packages on beds, pallets or the like, as claimed in Claim 1.

Other features and advantages of the present invention will be made clear in the course of the following description, to be considered as a non-limiting example, which refers to the attached drawings, in which:
- Fig. 1 is a plan view of a station for receiving and stacking groups of packages, comprising a pallet in the proximity of which there is a structure for compacting the groups of packages and a movable device for winding a band of film around the various layers of groups of packages placed on the pallet;
- Figs. 2a-2f are schematic illustrations of a sequence in which a first layer of groups of packages is positioned on a pallet according to the present method; and
- Figs. 3a-3g are schematic illustrations of a sequence in which a second layer of groups of packages is positioned on top of the first layer of groups of packages positioned previously on the pallet.

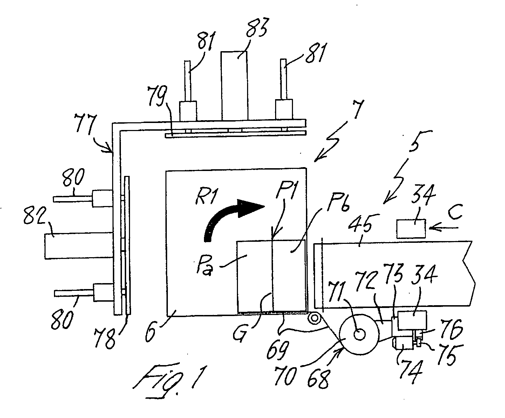

With reference to the attached drawings and with particular reference to Fig. 1, P1 indicates a first group of packages formed by two packages Pa and Pb placed beside each other on a specified contact plane G. This first group of packages P1 is placed at one of the four corners of a pallet 6 located in a station 7 for receiving and stacking the groups of packages. This pallet 6 rests on a fixed base and can be rotated, by corresponding actuator means, with respect to this base. The contact plane G between the packages Pa and Pb which form said group of packages P1 lies transversely with respect to the direction of positioning of the group of packages P1 on the pallet 6, in other words the direction C of travel of a conveyor belt 45 of a station 5 for positioning the groups of packages, located upstream of the group of packages receives station 7. This conveyor belt 45 is movable both vertically upwards and downwards along two vertical columns 34, and horizontally towards or away from the pallet 6. Substantially, the pallet 6 can be thought of as being theoretically divided into four identical parts, one group of packages being positioned on each of these parts, and, as the drawing clearly shows, the pallet 6 is designed so as to receive four groups of packages, each formed by two packages, in each layer. A movable device 68 for feeding a stretch film for wrapping and banding the groups of packages is also provided in the proximity of the station 7 for receiving and stacking the groups of packages. This device 68 comprises a free-running roller 70 for feeding the film 69: the roller 70 is free to rotate about a vertical spindle 71 fixed to a support 72 secured to a guide 73, which can be moved vertically upwards or downwards along one of the two columns 34, in this case the lower column as it appears in the drawing. This guide 73 is actuated by means of a motor 74 which rotates a pinion 75 in one or other direction, this pinion engaging with a vertical rack 76 fixed on the outside of the column 34. A substantially L-shaped structure 77 for compacting the groups of packages is positioned in the proximity of, and at a certain distance from, two adjacent sides of the pallet 6, which form a right angle between them. This structure 77 comprises two plates 78 and 79 for pushing the groups of packages, each of these plates being movable horizontally along two corresponding parallel guides 80 and 81 by means of corresponding hydraulic or pneumatic actuators 82 and 83. The plate 78 for pushing the groups of packages acts in a forward direction, opposite the direction of the arrow C, to compact the groups of packages on the pallet, and in a backward direction, opposite the first direction, to move away from the pallet. The plate 79 acts in forward and backward directions lying at 90° to the directions of the plate 78. This L-shaped structure 77 is placed at a certain distance from the pallet 6 to allow the pallet 6 to rotate with respect to the base on which it rests. Preferably, this structure 77 is positioned in the proximity of the corner of the pallet 6 opposite the corner on which the group of packages P1 and the subsequent groups of packages are placed. The pallet banding film 69 has a width equal to the height of the group of packages P1 and of the subsequent groups of packages, and is positioned initially on the outer side of the group of packages P1 and consequently on the two outer sides of the packages Pa and Pb which form it. As will be realized, the rotation of the pallet 6 through 90° at different times causes the film 69 for banding the groups of packages to be wrapped automatically around the first layer of groups of packages which is positioned on the pallet 6.

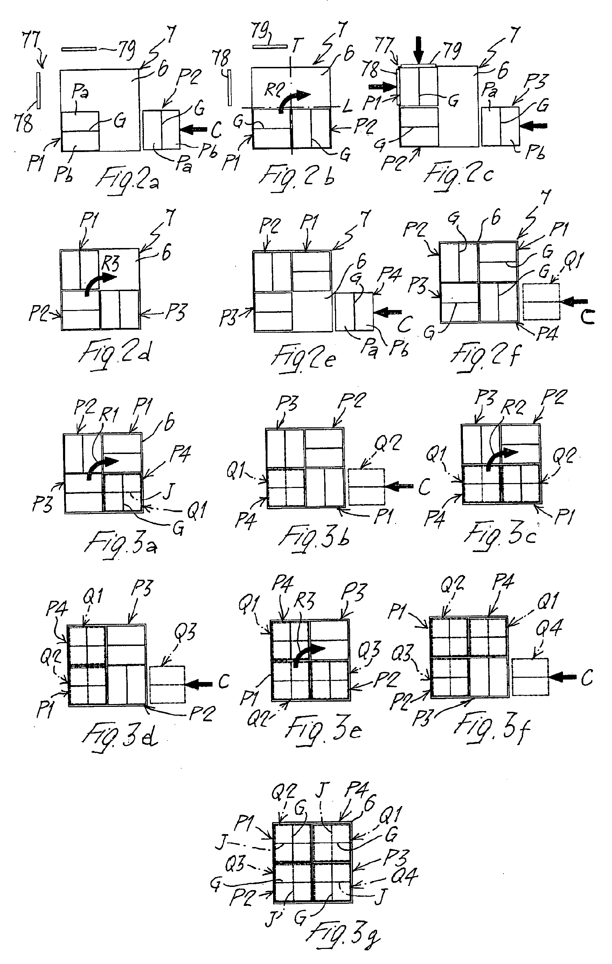

At this point, the first group of packages P1 is positioned correctly on one corner of the pallet 6, as shown in Fig. 1. To position a second group of packages P2, the corner where the group of packages P1 is currently positioned must be left free, and therefore the pallet 6 is rotated through 90° in the direction of the arrow R1 and reaches the position shown in Fig. 2a, so as to free the area for receiving the groups of packages. At this point, a second group of packages P2 can be placed on the pallet 6, this group of packages having a contact plane G between its constituent packages Pa and Pb which lies along a general transverse plane T of the equipment, in the same way as the contact plane G between the two packages of the group of packages P1, as can be seen by comparing Figures 2b and 1. Following the rotation of the pallet 6, the group of packages P1 is also rotated through 90° (see Fig. 2a), as a result of which the contact plane G of the two packages Pa and Pb which form this group of packages P1 lies along a general longitudinal plane L of the equipment. When the second group of packages P2 is positioned on the corner of the pallet 6, as shown in Fig. 2b, the two contact planes G of the packages Pa and Pb forming the groups of packages P1 and P2 lie orthogonally to each other.

At this point, the pallet 6 is rotated again through 90° in the direction of the arrow R2 in such a way that the area for receiving the groups of packages becomes free again. Fig. 2c shows a group of packages P3 which is about to arrive on the pallet 6 from the group of packages positioning station 5, in a way which is entirely similar to that described for the groups of packages P1 and P2. In the meantime, the group of packages P1 has arrived at the corner of the pallet 6 where the structure 77 for compacting the groups of packages is positioned, this structure being provided with the two plates 78 and 79 which are moved from the positions shown in Figures 2a and 2b and brought into contact with the group of packages P1 by translation in the direction of the arrows shown in Fig. 2c. Therefore, whenever a given group of packages reaches the corner where the structure 77 is positioned, the plates 78 and 79 are translated towards two sides of the group of packages, lying at 90° to each other, in order to compact the group of packages correctly. It should be noted that, because the present method is intended to produce a multiple-layer stack of groups of packages, the compaction plates 78 and 79 must have a height at least equal to the stack of groups of packages which is to be produced, or, alternatively, must be provided with means for their vertical translation upwards or downwards, to compact the various layers of groups of packages which are produced. At this point (see Fig. 2d) only one group of packages is needed to complete the first layer of four groups of packages on the pallet 6, and the pallet 6 is therefore rotated for a third time through 90° in the direction of the arrow R3 so that it is positioned as shown in Fig. 2e. The final group of packages P4 of the first layer of groups of packages is positioned on the pallet 6 in an entirely similar way to that described for the three preceding groups of packages P1, P2 and P3. The first completed layer of four groups of packages P1, P2, P3 and P4, each formed by two packages Pa and Pb placed beside each other on a corresponding contact plane G, is shown in Fig. 2f. It should be noted that, advantageously, according to the present method, the contact planes G between the packages Pa and Pb of every pair of adjacent groups of packages are always orthogonal to each other and never lie in the same direction, as can be seen, for example, in the case of the two mutually orthogonal contact planes G between the two packages of each of the two adjacent groups of packages P1 and P2, or the two mutually orthogonal contact planes G between the two packages of each of the two groups of packages P1 and P4 placed beside each other. This positioning of the contact planes G between the packages Pa and Pb of the various groups of packages placed beside each other provides optimal stability for the stack of layers of groups of packages which is being produced. It should be noted that, with each rotation of the pallet 6, shown as R1, R2 and R3, the device 68 for banding with the film 69 as shown in Fig. 1 has wrapped one side of the groups of packages, and therefore the first layer of groups of packages P1, P2, P3 and P4 is laterally banded with the film 69. This is because the correct orientation of the contact planes G between the four pairs of packages Pa and Pb forming the four groups of packages P1, P2, P3 and P4 (these planes G being necessarily orthogonal to each other for each pair of groups of packages placed beside each other, as stated above) is achieved by means of the three 90° rotations R1, R2 and R3 of the pallet 6.

At this point, the formation of a second layer of four groups of packages Q1, Q2, Q3 and Q4 can begin, each of these groups of packages again being formed by two packages Qa and Qb placed beside each other and in contact with each other along a contact plane J. This second layer of groups of packages is correctly positioned on top of the first layer of four groups of packages P1, P2, P3 and P4 described above.

The first group of packages Q1 of this second layer is transferred to the positioning station 5 and travels in the direction of the arrow C on the conveyor belt 45 until it reaches the end of this belt 45 (see Fig. 2f). As shown in Fig. 3a, the group of packages Q1 is in the same position as the group of packages P1 in Fig. 1. The contact plane J between the packages Qa and Qb which form this group of packages Q1 is advantageously orthogonal to the contact plane G of the packages Pa and Pb which form the group of packages P1. For the addition of the groups of packages Q2, Q3 and Q4 which follow the group of packages Q1 and are combined therewith to form the second layer of groups of packages on the pallet 6, the equipment carries out the same operations as those completed for the group of packages Q1 and for the preceding groups of packages P1-P4. It should also be noted, in Figures 3b, 3d and 3f, that the groups of packages Q2, Q3 and Q4 always arrive on the pallet 6 with the contact plane J of the corresponding packages Qa and Qb lying along the same plane, that is to say a plane which is substantially longitudinal with respect to the equipment, while each group of packages P1-P4 of the preceding layer arrives on the pallet 6 with the corresponding contact planes G of the corresponding packages Pa and Pb lying on a plane which is substantially transverse with respect to the equipment. In this case also, as described previously with reference to the addition of the groups of packages P2-P4 following the group of packages P1, whenever a new group of packages has been positioned on the layer of groups of packages P1-P4, the pallet 6 is rotated through 90° as shown by the arrows R1, R2 and R3, as is clearly shown in Figures 3a, 3c and 3e. The final arrangement, with the first two layers of groups of packages P1-P4 and Q1-Q4 stacked on the pallet, is shown in Fig. 3g. In the case of the four groups of packages Q1-Q4, as in the previous case, the contact planes J between the packages of every pair of groups of packages placed beside each other are always orthogonal to each other and never lie in the same direction, as can be seen, for example, in the case of the two mutually orthogonal contact planes J of the packages forming the two groups of packages Q1 and Q2 placed beside each other, or the two mutually orthogonal contact planes J of the packages forming the two groups of packages Q1 and Q4 placed beside each other. Additionally, because of the 90° rotation of the groups of packages Q1-Q4 which precedes the arrival at the stacking station 7, each group of packages Q1-Q4 has a contact plane J between the corresponding packages forming it which is orthogonal to the contact plane G between the packages forming the underlying group of packages, as can be seen in the case of the groups of packages Q1, Q2, Q3 and Q4 positioned on top of the groups of packages P4, P1, P2 and P3 respectively in the final arrangement of Fig. 3g or in the intermediate arrangement of Figures 3a-3f. It should be noted that the formation of this second layer of groups of packages Q1-Q4, and of any subsequent layers, makes use of the structure 77 for compacting the groups of packages, which is omitted from Figures 3a-3b for reasons of clarity, but which is still located in the position shown, for example, in Fig. 2a. It should also be noted that, when the pallet 6 rotates, the device 68 for banding the various groups of packages P1-P4 and Q1-Q4 with the film 69 is always active, and can therefore continuously wrap the various groups of packages in the layers stacked on the pallet 6, following a kind of helical path, since this device 68 is provided with a vertical drive, as shown in Fig. 1, to move from the base layer of groups of packages to a higher layer, and so on.

In order to form a third layer of groups of packages, the operations by which the groups of packages P1-P4 were positioned on the pallet 6 are repeated exactly, and therefore the groups of packages in this third layer are positioned on top of the second layer of groups of packages Q1-Q4 with the contact planes between the various pairs of packages which form this third layer orthogonal to the contact planes J of the groups of packages Q1-Q4 on top of which they are deposited, as has been described with reference to the placing of the second layer of groups of packages Q1-Q4 on the first layer of groups of packages P1-P4. In the present example, therefore, in the odd-numbered layers of groups of packages to be formed on the pallet, in other words the first (P1-P4), the third, the fifth, and so on, the groups of packages forming each of these layers are not rotated before reaching the station 7, whereas, in the even-numbered layers of groups of packages, that is to say the second (Q1-Q4), the fourth, and so on, the groups of packages forming these layers are rotated through 90°. Clearly, the stack of groups of packages can also be formed correctly according to the present method by inverting this sequence, that is to say by rotating the groups of packages which form the odd-numbered layers and leaving the groups of packages which form the even-numbered layers on the pallet 6 unrotated, since in this way also, as shown for the layers of groups of packages P1-P4 and Q1-Q4, in each of the groups of packages, the contact plane of its constituent packages will in any case be orthogonal to any contact plane of the packages of a group of packages which is placed beside, beneath, or on top of it.

As shown in the preceding description, the groups of packages P1-P4 and Q1-Q4 considered by way of example are of substantially square or rectangular shape, and each is formed by two rectangular packages Pa, Pb or Qa, Qb, which are suitably placed beside each other on a specified contact plane G or J. However, a single group of packages could be placed on the pallet in each layer, depending on the dimensions of the pallet or of the packages themselves, for example. This group of packages would be formed by two packages placed beside each other, in order to produce a final stack simply formed by a column of groups of packages on top of each other, for example a single column of groups of packages P3, Q4 and so on. It would also be possible to place only two groups of packages placed beside each other in each layer on the pallet, in which case there would be, for example, the groups of packages P2 and P3 on which the groups of packages Q3 and Q4 would be positioned: in this case, the pallet 6 would have to be rotated through 180° to receive each group of packages following the first group, instead of through 90° as described above. According to an alternative embodiment not part of the claimed invention, each of these packages could also be triangular in shape: for example, in the case of two identical packages in the form of right-angled triangles, if these were suitably placed beside each other they would form a rectangular or square group of packages, and the contact plane of the two packages would lie along a diagonal. Consequently, the shape of the packages and the number of groups of packages to be arranged in each layer has no effect on the efficacy of the present method and of the present equipment, provided that the contact plane of any pair of packages Pa and Pb or Qa and Qb placed beside each other and arranged on the pallet always lies in a direction which is different from, and preferably orthogonal to, the contact plane of another pair of packages which is placed beside, beneath, or on top of the first pair. The present method can also be used to position one package Pa, Pb, Qa or Qb at a time, if suitable means are provided for the translation of the pallet in addition to its rotation. Thus, after the first package has been positioned, the pallet 6 could be translated to receive a second package placed beside the first package, and the pallet could then be rotated through 90° for the positioning of a third and a fourth package, and so on, until the final layers of packages have been formed.

## Claims

1. Method for the confection of multi-layer packages on beds, pallets or the like, **characterized by** the following steps:
a) positioning a first group of packages (P1) in a predetermined area of the pallet (6);
b) moving the pallet (6) to allow a group of packages (P2) following the first group of packages (P1) to be placed beside said first group of packages (P1);and rotating the pallet (6) through 180° if each individual layer is formed by two groups of packages placed beside each other, or rotating it through 90° if each layer is formed by four or more groups of packages placed beside each other (P1-P4, Q1-Q4), in which each of the groups of packages (P1-P4, Q1-Q4) which form a single layer comprises two substantially rectangular or square packages (Pa, Pb, Qa, Qb) placed besides each other and defining a contact plane (G,J);
c) repeating said steps a) and b) until a first layer of adjacent groups of packages (P1, P2, P3, P4) is produced, the contact plane (G) of two first packages (Pa, Pb) placed beside each other in said first group of packages lying in a direction substantially orthogonal to the contact plane (G) of two second packages (Pa, Pb) which are adjacent to each other and are placed beside said first packages (Pa, Pb);
d) repeating steps a), b) and c) until a desired number of layers of groups of packages (P1-P4, Q1-Q4) has been positioned on the pallet, the contact plane (J) of two generic packages (Qa, Qb) placed beside each other lying in a direction which is substantially orthogonal to the contact plane (G) of two other packages (Pa, Pb) which are placed beside each other beneath or on top of said two generic packages (Qa, Qb);
e) automatically wrapping said layers of groups of packages (P1-P4, Q1-Q4), one layer at a time, with stretch film (69).

2. Method according to Claim 1, **characterized in that** the packages or groups of packages (Q1-Q4) of an even- -numbered layer of groups of packages are rotated through approximately 90° upstream of the pallet (6), while the packages or groups of packages (P1-P4) of an odd- -numbered layer are left in the same position throughout the whole cycle of initial collection and final positioning on the pallet (6), or vice versa.

3. Method according to Claim 1, **characterized in that**, before said step a), each individual package or group of packages (P1-P4, Q1-Q4) is positioned on a conveyor belt (45) which is movable vertically upwards or downwards and which runs towards said pallet (6), said conveyor belt (45) also being movable horizontally away from the pallet (6), so as to deposit each individual package or group of packages (P1-P4, Q1-Q4) in the correct position on the surface of the pallet (6), or on a layer of groups of packages deposited previously.

## Patentansprüche

1. Ein Verfahren für die Herstellung von mehrlagigen Verpackungen auf Ablagen, Paletten oder dergleichen, das durch folgende Schritte gekennzeichnet wird:
a) Die Anordnung einer ersten Gruppe von Verpackungen (P1) in einem vorbestimmten Bereich der Palette (6);
b) Die Bewegung der Palette (6), damit eine Gruppe von Verpackungen (P2), die der ersten Gruppe von Verpackungen (P1) folgt, jeweils neben der genannten ersten Gruppe von Verpackungen (P1) angeordnet werden kann; und die entsprechende Drehung der Palette (6) um 180°, falls jede einzelne Lage durch zwei Gruppen von Verpackungen gebildet wird, welche jeweils nebeneinander angeordnet sind, beziehungsweise die Drehung um 90°, falls jede Lage durch vier oder mehrere Gruppen von Verpackungen gebildet wird, welche jeweils nebeneinander (P1-P4, Q1-Q4) angeordnet sind, wobei jede einzelne Gruppe von Verpackungen (P1-P4, Q1-Q4), die eine einzige Lage bilden, zwei im wesentlichen rechteckige oder quadratische Verpackungen umfassen (Pa, Pb, Qa, Qb), welche jeweils nebeneinander angeordnet sind und eine entsprechende Kontaktfläche (G, J) bilden;
c) Die Wiederholung der genannten Schritte a) und b), bis eine erste Lage anliegender Gruppen von Verpackungen (P1,P2,P3,P4) entsteht, wobei die Kontaktfläche (G) der ersten beiden Verpackungen (Pa, Pb), welche jeweils nebeneinander in der genannten ersten Gruppe von Verpackungen angeordnet sind, in einer im wesentlichen orthogonalen Richtung zur Kontaktfläche (G) von zwei zweiten Verpackungen (Pa, Pb) liegt, die aneinander anliegen und neben den genannten ersten Verpackungen (Pa, Pb) angeordnet sind;
d) Die Wiederholung der Schritte a), b) und c), bis eine gewünschte Anzahl von Lagen von Gruppen von Verpackungen (P1-P4, Q1-Q4) auf der Palette angeordnet worden ist, wobei die Kontaktfläche (J) der beiden allgemeinen Verpackungen (Qa, Qb), welche jeweils nebeneinander angeordnet sind, in einer Richtung liegt, die im wesentlichen orthogonal zu der Kontaktfläche (G) der beiden anderen Verpackungen (Pa, Pb) verläuft, welche nebeneinander, jeweils unter oder über den genannten beiden allgemeinen Verpackungen (Qa, Qb), angeordnet sind;
e) Die automatische Umverpackung der genannten Lagen von Gruppen von Verpackungen (P1-P4, Q1-Q4), und zwar jeweils eine Lage auf einmal, mit einer entsprechenden Spannfolie (69).

2. Eine Methode gemäß Anspruch 1, **dadurch gekennzeichnet, dass** die Verpackungen oder Gruppen von Verpackungen (Q1-Q4) einer geradzahligen Lage von Gruppen von Verpackungen um ungefähr 90° stromaufwärts von der Palette (6) gedreht werden, während die Verpackungen oder Gruppen von Verpackungen (P1-P4) einer ungeradzahligen Lage während des gesamten Ablaufs der anfänglichen Sammlung und endgültigen Anordnung auf der Palette (6) jeweils in der gleichen Stellung gelassen werden, oder umgekehrt.

3. Eine Methode gemäß Anspruch 1, **dadurch gekennzeichnet, dass** jede einzelne Verpackung oder Gruppe von Verpackungen (P1-P4, Q1-Q4) vor dem genannten Schritt a) auf einem Förderband (45) angeordnet wird, welches jeweils senkrecht nach oben oder unten bewegt werden kann und in Richtung der genannten Palette (6) läuft, wobei das genannte Förderband (45) jeweils auch waagerecht weg von der Palette (6) bewegt werden kann, so dass jede einzelne Verpackung oder Gruppe von Verpackungen (P1-P4,Q1-Q4) in der richtigen Stellung auf der Fläche der Palette (6) beziehungsweise auf einer zuvor abgelegten Lage von Gruppen von Verpackungen abgelegt wird.

## Revendications

1. Procédé permettant la confection de paquets multicouches sur des plateaux, des palettes ou analogues, **caractérisé par** les étapes suivantes consistant à :
a) positionner un premier groupe de paquets (P1) dans une zone prédéterminée de la palette (6) ;
b) déplacer la palette (6) pour permettre à un groupe de paquets (P2) suivant le premier groupe de paquets (P1) d'être placé à côté dudit premier groupe de paquets (P1) ; et tourner la palette (6) de 180° si chaque couche est composée de deux groupes de paquets placés l'un à côté de l'autre, ou la tourner de 90 ° si chaque couche se compose de quatre groupes ou plus de paquets placés les uns à côté des autres (P1-P4, Q1-Q4), où chacun des groupes de paquets (P1-P4, Q1-Q4) formant une seule couche comprend deux paquets sensiblement carrés ou rectangulaires (Pa, Pb, Qa, Qb) placés l'un à côté de l'autre et définissant un plan de contact (G, J) ;
c) répéter lesdites étapes a) et b) jusqu'à ce qu'une première couche de groupes de paquets adjacents (P1, P2, P3, P4) soit constituée, le plan de contact (G) de deux premiers paquets (Pa, Pb) placés l'un à côté de l'autre dans ledit premier groupe de paquets étant substantiellement orthogonal au plan de contact (G) de deux deuxièmes paquets (Pa, Pb) qui sont adjacents l'un à l'autre et sont placés à côté desdits premiers paquets (Pa, Pb) ;
d) répéter les étapes a), b) et c) jusqu'à ce qu'un nombre souhaité de couches de groupes de paquets (P1-P4, Q1-Q4) ait été placé sur la palette, le plan de contact (J) de deux paquets génériques (Qa, Qb) placés l'un à côté de l'autre étant sensiblement orthogonal au plan de contact (G) de deux autres paquets (Pa, Pb) qui sont placés l'un à côté de l'autre sous ou sur lesdits deux paquets génériques (Qa, Qb) ;
e) emballer automatiquement lesdites couches de groupes de paquets (P1-P4, Q1-Q4), une couche à la fois, avec du film étirable (69).

2. Procédé selon la revendication 1, **caractérisé en ce que** les paquets ou groupes de paquets (Q1-Q4) d'une couche au nombre pair de groupes de paquets sont tournés approximativement de 90° en amont de la palette (6), tandis que les paquets ou groupes de paquets (P1-P4) d'une couche au nombre impair sont laissés dans la même position pendant tout le cycle de ramassage initial et de placement final sur la palette (6), ou vice-versa.

3. Procédé selon la revendication 1, **caractérisé en ce qu'**avant ladite première étape a), chacun des paquets ou groupes de paquets (P1-P4, Q1-Q4) est placé sur une courroie transporteuse (45) qui peut se déplacer verticalement vers le haut ou vers le bas et qui se dirige vers ladite palette (6), ladite courroie transporteuse (45) pouvant également se déplacer horizontalement loin de la palette (6), pour déposer chaque paquet ou groupe de paquets (P1-P4, Q1-Q4) dans la bonne position sur la surface de la palette (6), ou sur une couche de groupes de paquets déposée précédemment.
